# EUROPEAN PATENT APPLICATION

(11) **EP 3 883 049 A1**
(43) Date of publication of application: **22.09.2021**
(21) Application number: 21159536.8
(22) Date of filing: 26.02.2021
(51) Int. Cl.: H01M 50/531, H01M 50/533, H01M 10/052, H01M 10/058, H01M 10/42

(54) **BATTERY**

(30) Priority: 18.03.2020 JP 2020047168
(71) Applicant: KABUSHIKI KAISHA TOSHIBA, Minato-ku Tokyo 105-0023 (JP)
(72) Inventor: Watanabe, Yuki, Tokyo, 105-0023 (JP); Tanaka, Masanori, Tokyo, 105-0023 (JP); Namiki, Yusuke, Tokyo, 105-0023 (JP); Yamagishi, Genki, Tokyo, 105-0023 (JP); Negishi, Nobuyasu, Tokyo, 105-0023 (JP)
(74) Representative: Hoffmann Eitle

(57) **Abstract**

According to one embodiment, a battery (1) includes an electrode group (2), a current collector tab (12), a lead member (16), and an electrode terminal (13). The current collector tab (12) protrudes in the electrode group (2), and is connected to the lead member (16) at an end on a side opposite to a root position (E1). The lead member (16) includes a bonded portion (21;23) formed at a part connected to the current collector tab, (12) and is thicker than the current collector tab (12). The lead member (16) is connected to the electrode terminal (13) at a position different from the part connected to the current collector tab (12). In the current collector tab (12), a tab bent portion (22) is provided between the root position (E1) and the part connected to the lead member (16).

## Description

### FIELD

Embodiments described herein relate generally to a battery.

### BACKGROUND

A battery such as a secondary battery includes an electrode group and electrode terminals (positive electrode terminal and negative electrode terminal). In the battery, the electrode group is electrically connected to each of the electrode terminals by an electric conduction structure formed by a lead member and the like. In recent years, batteries installed on vehicles or the like are required to be charged and discharged with a large current. Thus, a battery, in which an electric conduction structure between an electrode group and each of electrode terminals is configured to facilitate current flow, is installed in a vehicle or the like. A battery may involve an external short circuit caused when a metal piece or the like comes into contact with a pair of electrode terminals, leading to the pair of electrode terminals being electrically connected without the electrode group interposed therebetween. If the external short circuit is caused in the battery configured to facilitate current flow as described above, an excessive current may flow through the battery, leading to a large amount of heat generated in the electrode group, etc.

Therefore, batteries have been developed in which if the excessive current flows as described above, a part of the electric conduction structure between the electrode group and each of the electrode terminals is melted to cut off the current. In one battery, the electric conduction structure is provided with a part having a small sectional area, and when an excessive current flows, the part having a small sectional area is melted. In another battery, a part of the lead member constituting the electric conduction structure is made of a metal having a resistance and a melting point different from those of other parts. When the excessive current flows, the part made of the metal having a resistance and a melting point different from those of other parts is melted by heat. The above-described battery, in which the current is cut off by melting of a part of the electric conduction structure between the electrode group and each of the electrode terminals, is required to be further discharged up to, for example, a complete discharge state where a state of charge (SOC) is 0%, after the current (excessive current) is cut off.

### BRIEF DESCRIPTION OF THE DRAWINGS

FIG. 1 is a schematic view showing a battery according to a first embodiment;
FIG. 2 is a schematic view showing, in the battery according to the first embodiment, one of the current collector tabs and a vicinity thereof viewed from one side in a thickness direction of an electrode group;
FIG. 3 is a schematic view showing, in the battery according to the first embodiment, one of the current collector tabs and a vicinity thereof viewed from one side in a width direction of the electrode group;
FIG. 4 is a schematic view showing, in a battery according to a modification of the first embodiment, one of the current collector tabs and a vicinity thereof viewed from the width direction of the electrode group;
FIG. 5 is a schematic view showing, in a battery of a first comparative structure with respect to the embodiment, one of the current collector tabs and a vicinity thereof viewed from one side in the thickness direction of the electrode group;
FIG. 6 is a schematic view showing, in the battery of the first comparative structure with respect to the embodiment, one of the current collector tabs and a vicinity thereof viewed from one side in the width direction of the electrode group; and
FIG. 7 is a schematic view showing, in a battery of a second comparative structure with respect to the embodiment, one of the current collector tabs and a vicinity thereof viewed from one side in the width direction of the electrode group.

### DETAILED DESCRIPTION

An object to be achieved by the embodiments is to provide a battery that can be discharged after an excessive current is cut off by melting a part of an electric conduction structure between an electrode group and an electrode terminal.

According to an embodiment, a battery includes an electrode group, a current collector tab, a lead member, and an electrode terminal. The electrode group includes a positive electrode and a negative electrode, and in the electrode group, the current collector tab protrudes. The current collector tab is connected to the lead member at an end on a side opposite to a root position of a protruding portion, and in the lead member, a bonded portion is formed at a part connected to the current collector tab. The lead member is thicker than the current collector tab, and connected to the electrode terminal at a position different from the part connected to the current collector tab. The electrode terminal is electrically connected to the current collector tab with the lead member interposed therebetween. In the current collector tab, a tab bent portion is provided between the root position of the protruding portion and the position connected to the lead member, and the current collector tab is bent at the tab bent portion.

Hereinafter, embodiments will be described with reference to drawings.

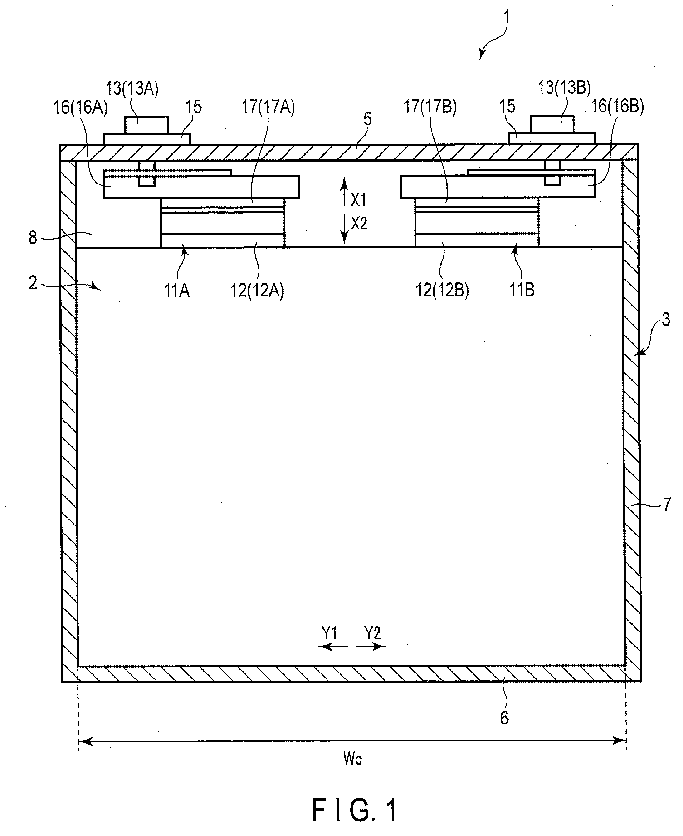

FIG. 1 illustrates a battery 1 according to the first embodiment as an example of the embodiment. In the embodiment of FIG. 1, the battery 1 includes an electrode group 2, a container 3, and a lid member 5. The container 3 and the lid member 5 are each made of a metal, and serve as a container member of the battery 1. The container 3 includes a bottom wall 6 and a peripheral wall 7, and the bottom wall 6 and the peripheral wall 7 define an inner cavity 8 in which the electrode group 2 is housed. In the container 3, the inner cavity 8 is open toward a side opposite to a side in which the bottom wall 6 is positioned. The lid member 5 is attached to the peripheral wall 7 at an end on a side opposite to the bottom wall 6, and closes the opening of the inner cavity 8 of the container 3.

The electrode group 2 includes a positive electrode 11A and a negative electrode 11B. In the electrode group 2, a separator (not shown) is interposed between the positive electrode 11A and the negative electrode 11B. The separator is made of a material having electrical insulation properties, and electrically insulates the positive electrode 11A from the negative electrode 11B. The positive electrode 11A includes a positive electrode current collector such as a positive electrode current collecting foil, and a positive electrode active material-containing layer (not shown) supported on a surface of the positive electrode current collector. The positive electrode current collector includes a positive electrode current collector tab 12A as a portion not supporting the positive electrode active material-containing layer. The negative electrode 11B includes a negative electrode current collector such as a negative electrode current collecting foil, and a negative electrode active material-containing layer (not shown) supported on a surface of the negative electrode current collector. The negative electrode current collector includes a negative electrode current collector tab 12B as a portion not supporting the negative electrode active material-containing layer.

As described above, the electrode group 2 includes the positive electrode current collector tab 12A as one of a pair of current collector tabs 12, and the negative electrode current collector tab 12B different from the positive electrode current collector tab 12A as the other of the pair of current collector tabs 12. In the electrode group 2, the positive electrode current collector tab 12A protrudes from the negative electrode active material-containing layer and the separator. The negative electrode current collector tab 12B protrudes from the positive electrode active material-containing layer and the separator toward a side in which the positive electrode current collector tab 12A protrudes. That is, the pair of current collector tabs 12 protrude toward the same side in the electrode group 2.

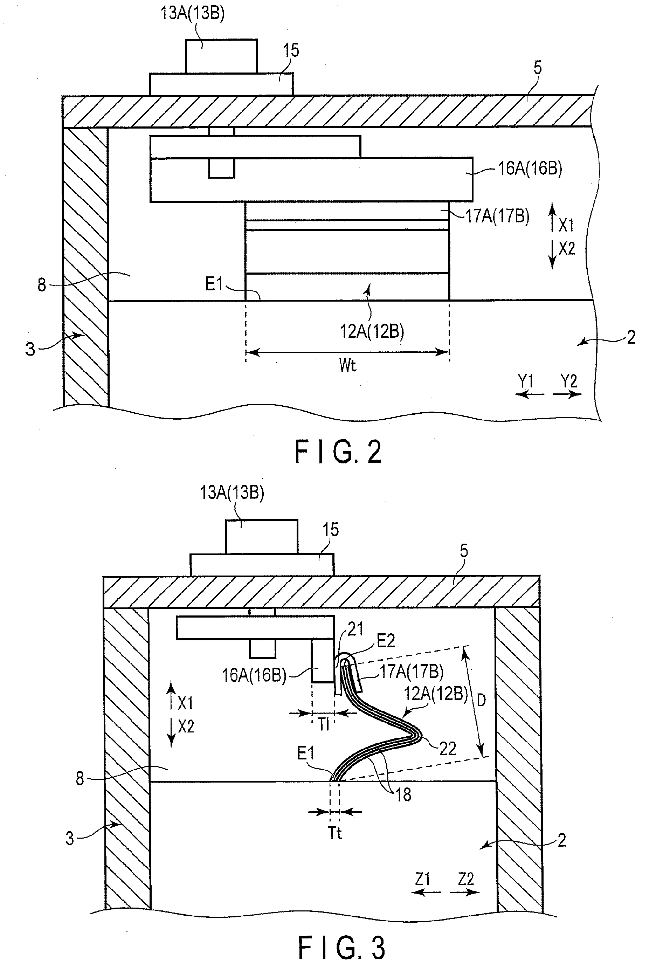

FIGS. 2 and 3 show the structure of one of the current collector tabs 12 (12A or 12B) and the vicinity thereof in the battery of FIG. 1. As shown in FIGS. 1 to 3, in the electrode group 2, a protruding direction of the current collector tabs 12 (direction indicated by arrow X1) and a direction opposite to the protruding direction of the current collector tabs 12 (direction indicated by arrow X2) are defined. Further, in the electrode group 2, a width direction (direction indicated by arrows Y1 and Y2) intersecting (perpendicular to or substantially perpendicular to) the protruding direction of the current collector tabs 12, and a thickness direction (direction indicated by arrows Z1 and Z2) intersecting both the protruding direction of the current collector tabs 12 and the width direction, are defined. A dimension of the electrode group 2 along the thickness direction (thickness of the electrode group 2) is smaller than a dimension of the electrode group 2 along the protruding direction of the current collector tabs 12 and a dimension of electrode group 2 along the width direction (width Wc of the electrode group 2). Thus, the electrode group 2 is formed to have a flat shape. FIGS. 1 and 2 show the electrode group 2 viewed from one side in the thickness direction (arrow Z1 side), whereas FIG. 3 shows the electrode group 2 viewed from one side in the width direction (internal side in the width direction).

Further, the pair of current collector tabs 12 are disposed to be apart from each other in the width direction of the electrode group 2. In the inner cavity 8 of the container 3, the current collector tabs 12 protrude toward a side in which the lid member 5 is located. Here, width Wt of each of the current collector tabs 12, which is the dimension of each of the current collector tabs 12 (12A, 12B) along the width direction of the electrode group 2, is defined. In the embodiment of FIGS. 1 to 3, ratio Wt/Wc of the width Wt of each current collector tab 12 to the width Wc of the electrode group 2 is smaller than 0.50. Further, the ratio Wt/Wc of the width Wt of each current collector tab 12 to the width Wc of the electrode group 2 is preferably from 0.15 to 0.30. The width direction of each current collector tab 12 coincides with or substantially coincides with the width direction of the electrode group 2.

Inside the inner cavity 8, the electrode group 2 holds an electrolyte such as an electrolytic solution (not shown). In the embodiment of FIGS. 1 to 3, a pair of electrode terminals 13 are attached to an outer surface of the lid member 5. One of the electrode terminals 13 is a positive electrode terminal (13A) while the other is a negative electrode terminal (13B). Thus, the electrode terminals 13 have electrical polarities opposite to each other. An insulating member 15 is interposed between each electrode terminal 13 and the lid member 5. The insulating member 15 electrically insulates each electrode terminal 13 from the lid member 5 and the container 3.

The battery 1 of the embodiment of FIGS. 1 to 3 is provided with a pair of lead members 16 and a pair of backup leads 17. A positive electrode lead member 16A as one of the lead members 16 is connected to the positive electrode current collector tab 12A with a positive electrode backup lead 17A as one of the backup leads 17 interposed therebetween. The positive electrode terminal 13A is electrically connected to the positive electrode current collector tab 12A with the positive electrode lead member 16A interposed therebetween. A negative electrode lead member 16B different from the positive electrode lead member 16A as the other of the lead members 16 is connected to the negative electrode current collector tab 12B with a negative electrode backup lead 17B different from the positive electrode backup lead 17A as the other of the backup leads 17 interposed therebetween. The negative electrode terminal 13B is electrically connected to the negative electrode current collector tab 12B with the negative electrode lead member 16B interposed therebetween.

As described above, each of the pair of electrode terminals 13 is electrically connected to the electrode group 2 through an electric conduction structure formed by a corresponding one of the lead members 16, a corresponding one of the backup leads 17, and a corresponding one of the current collector tabs 12. Inside the inner cavity 8, at least one insulating member (not shown) insulates the current collector tabs 12, the backup leads 17, and the lead members 16, from the container 3 and the lid member 5.

Each current collector tab 12 as a protruding portion in the electrode group 2 has a root position E1 and a protruding end. Each current collector tab 12 is connected to a corresponding one of the lead members 16 at a connected position E2 at the end on a side opposite to the root position E1 of the protruding portion. Therefore, each current collector tab 12 is connected to the corresponding one of the lead members 16 at the protruding end or in a vicinity thereof. Each lead member 16 is connected to a corresponding one of the electrode terminals 13 at a position different from the part connected to the corresponding one of the current collector tabs 12. Thus, in each lead member 16, the part connected to the corresponding one of the current collector tabs 12 is separated from the part connected to the corresponding one of the electrode terminals 13.

In each current collector tab 12, a thickness direction is defined, in which the thickness direction intersects (is perpendicular or substantially perpendicular to) both the above-described width direction (width direction of the electrode group 2) and an extending direction from the root position E1 to the protruding end (connected position E2). In each current collector tab 12, a plurality of strips 18, formed by the corresponding one of the positive current collector or the negative current collector, are bound while being stacked in the thickness direction. In each current collector tab 12, a distance between outer surfaces of the strips 18 at the outermost layers in the thickness direction is defined as thickness Tt.

Each lead member 16 is, for example, formed to have a plate shape, and has thickness Tl. In the present embodiment, each of the lead members 16 is thicker than each of the current collector tabs 12. That is, a ratio Tl/Tt of the thickness Tl of each lead member 16 to the thickness Tt of each current collector tab 12 is larger than 1. Furthermore, the ratio Tl/Tt of the thickness Tl of each lead member 16 to the thickness Tt of each current collector tab 12 is preferably from 1.4 to 3.0.

In the embodiment of FIGS. 1 to 3, each backup lead 17 is attached to a corresponding one of the current collector tabs 12 at the end on a side opposite to the root position E1 of the protruding portion. That is, a corresponding one of the backup leads 17 is attached at the protruding end or a vicinity thereof of each current collector tab 12, and attached at a connected position E2 connected to the corresponding one of the lead members 16 or a vicinity thereof. Further, each current collector tab 12 is sandwiched by the corresponding one of the backup leads 17 from both sides in the thickness direction. That is, each backup lead 17 is attached to the corresponding one of the current collector tabs 12 while sandwiching the corresponding one of the current collector tabs 12.

In the embodiment of FIGS. 1 to 3, each lead member 16 is connected to the connected position E2 of the corresponding one of the current collector tabs 12 while a part of the corresponding one of the backup leads 17 is sandwiched between the lead member 16 and the corresponding one of the current collector tabs 12. Each lead member 16 is bonded to the corresponding one of the backup leads 17 at a part connected to the corresponding one of the current collector tabs 12. That is, in each lead member 16, a bonded portion 21 bonded to the corresponding one of the backup leads 17 is formed at the part connected to the corresponding one of the current collector tabs 12.

Further, in each current collector tab 12, a tab bent portion 22 is formed between the root position E1 of the protruding portion and the connected position E2 connected to the corresponding one of the lead members 16. Each current collector tab 12 is bent at the tab bent portion 22. In each current collector tab 12, the extending direction changes at the tab bent portion 22. For example, each current collector tab 12 is folded at the tab bent portion 22.

Here, in each current collector tab 12, a linear distance D between the root position E1 of the protruding portion and the connected position E2 connected to the corresponding one of the lead members 16, and an extending length Lt from the root position E1 to the connected position E2, are defined. Because each current collector tab 12 is provided with the above-described tab bent portion 22, in each current collector tab 12, ratio Lt/D of the extending length Lt to the linear distance D is larger than 1. Further, the ratio Lt/D of the extending length Lt to the linear distance D in each current collector tab 12 is preferably from 3 to 6.

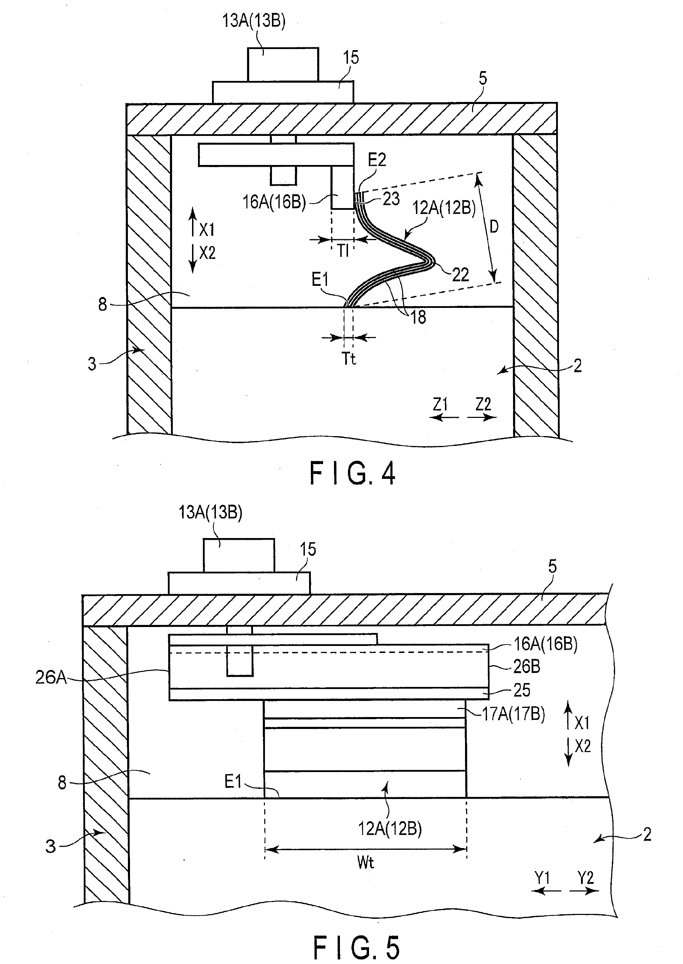

FIG. 4 shows, in the battery 1 according to a modification of the first embodiment, one of the current collector tabs 12 (12A or 12B) and the vicinity thereof. FIG. 4 shows the electrode group 2 viewed from one side in the width direction. The battery 1 according to the modification of FIG. 4 is not provided with backup leads 17. In the present modification also, each lead member 16 is connected to the connected position E2 of the corresponding one of the current collector tabs 12. Each lead member 16 is connected to the corresponding one of the electrode terminals 13 at a position different from the part connected to the corresponding one of the current collector tabs 12. However, in the present modification, each lead member 16 is directly bonded to the corresponding one of the current collector tabs 12 at a part connected to the corresponding one of the current collector tabs 12. That is, in each lead member 16, the bonded portion 23 bonded to the corresponding one of the current collector tabs 12 is formed at the part connected to the corresponding one of the current collector tabs 12.

In the present modification also, the tab bent portion 22 is formed in each current collector tab 12. Moreover, in the present modification also, the above-described ratios Wt/Wc, Tl/Tt, and Lt/D have the same values as those in the first embodiment, etc. The preferred ranges of the above-described ratios Wt/Wc, Tl/Tt, and Lt/D are the same as those in the first embodiment, etc.

In one modification, either the electric conduction structure between the electrode group 2 and the positive electrode terminal 13A or the electric conduction structure between the electrode group 2 and the negative electrode terminal 13B is formed as in the above-described embodiment, etc. Therefore, in the embodiment, etc., at least one of the electric conduction structure between the electrode group 2 and the positive electrode terminal 13A and the electric conduction structure between the electrode group 2 and the negative electrode terminal 13B may be formed as in the above-described embodiment, etc.

Hereinafter, structural elements, etc. of the battery according to the embodiment such as the battery 1 will be described in detail.

### 1) Positive Electrode and Negative Electrode

The positive electrode includes, as described above, the positive electrode current collector such as a positive electrode current collecting foil, and the positive electrode active material-containing layer supported on a surface of the positive electrode current collector. The positive electrode active material-containing layer is applied to one side or both sides of the positive electrode current collector. The positive electrode active material-containing layer contains a positive electrode active material, and may optionally contain a binder and an electro-conductive agent. Examples of positive electrode active materials include, but are not limited to, chalcogen compounds and polymers capable of occluding and releasing lithium ions, and examples of the chalcogen compound include oxides and sulfides.

Examples of oxides serving as the positive electrode active material include lithium-containing nickel cobalt manganese oxides, and examples of the lithium-containing nickel cobalt manganese oxides include a compound represented by Li_{w}NiₓCo_{y}Mn_{z}O₂ (0<w≤1, x+y+z=1), and a compound represented by Li₁₋ₛNi₁₋ₜ₋ᵤ₋ᵥCoₜMnᵤM1ᵥO₂ (where M1 is at least one selected from the group consisting of Mg, Al, Si, Ti, Zn, Zr, Ca and Sn, and -0.2<s<0.5, 0<t<0.5, 0<u<0.5, 0≤v<0.1, and t+u+v<1). Examples of other oxides usable as the positive electrode active material include lithium-containing cobalt oxides (for example, LiCoO₂), manganese dioxides, lithium manganese composite oxides (for example, LiMn₂O₄ and LiMnO₂), lithium-containing nickel oxides (for example, LiNiO₂), lithium-containing nickel cobalt oxides (for example, LiNi_{0.8}Co_{0.2}O₂), lithium-containing iron oxides, and vanadium oxides containing lithium. Examples of sulfides serving as the positive electrode active material include titanium disulfide and molybdenum disulfide. As the positive electrode active material, one type or two or more types can be used from the above-described materials.

Examples of electro-conductive agents contained in the positive electrode active material-containing layer include, but are not limited to, acetylene black, ketjen black, furnace black, carbon black, graphite, carbon nanotubes, and carbon nanofibers. As the electro-conductive agent, one type may be selected from the above-described materials, or two or more types may be selected from the above-described materials.

Examples of binders contained in the positive electrode active material-containing layer include, but are not limited to, polytetrafluoroethylene (PTFE), polyvinylidene fluoride (PVdf), fluorinated rubbers, styrene-butadiene rubbers (SBR), polypropylene (PP), polyethylene (PE), binders containing an acrylic copolymer as a primary component, and carboxymethyl cellulose (CMC). As the binder, one type may be selected from the above-described materials, or two or more types may be selected from the above-described materials. Carboxymethyl cellulose also acts as a thickener.

In the positive electrode active material-containing layer, the mixing ratio of the positive electrode active material is preferably from 75% to 96% by mass, the mixing ratio of the electro-conductive agent is preferably from 3% to 20% by mass, and the mixing ratio of the binder is preferably from 1% to 7% by mass.

The negative electrode includes, as described above, the negative electrode current collector such as a negative electrode current collecting foil, and the negative electrode active material-containing layer supported on a surface of the negative electrode current collector. The negative electrode active material-containing layer is applied to one side or both sides of the negative electrode current collector. The negative electrode active material-containing layer contains a negative electrode active material, and may optionally contain a binder and an electro-conductive agent. Examples of negative electrode active materials include, but are not limited to, metals, metal alloys, metal oxides, metal sulfides, metal nitrides, graphitic materials, and carbonaceous materials.

Examples of metals serving as the negative electrode active material include aluminum and lithium. Examples of metal alloys serving as the negative electrode active material include aluminum alloys, magnesium alloys, and lithium alloys. In addition to the metal, for example, semimetal such as silicon can be used as the negative electrode active material.

Examples of metal oxides serving as the negative electrode active material include titanium-containing oxides. Examples of titanium-containing oxides include lithium titanium oxides, monoclinic niobium-titanium composite oxides, and orthorhombic titanium-containing composite oxides. Examples of lithium titanium oxides include spinel-type lithium titanate (Li₄Ti₅O₁₂). Other examples of metal oxides include metal composite oxides containing at least one element selected from the group consisting of P, V, Sn, Cu, Ni, Nb and Fe together with Ti. Examples of oxides serving as the negative electrode active material include amorphous tin oxides such as SnB_{0.4}P_{0.6}O_{3.1}, tin silicon oxides such as SnSiO₃, tungsten oxides such as WO₃, and silicon-containing compounds such as SiO₂.

Examples of monoclinic niobium-titanium composite oxides include a compound represented by LiₐTi_{1-b}M1_{b}Nb_{2-c}M2_{c}O_{7+δ} (where M1 is at least one selected from the group consisting of Zr, Si and Sn, and M2 is at least one selected from the group consisting of V, Ta and Bi, and 0≤a≤5, 0≤b<1, 0≤c<2, -0.3≤δ≤0.3), and a compound represented by LiₐTi_{1-b}M3_{b+c}Nb_{2-c}O_{7-δ} (where M3 is at least one selected from the group consisting of Mg, Fe, Ni, Co, W, Ta and Mo, 0≤a≤5, 0≤b<1, 0≤c<2, -0.3≤δ≤0.3). Examples of monoclinic niobium-titanium composite oxides include LiₐNb₂TiO₇ (0≤a≤5).

Examples of orthorhombic titanium-containing composite oxides include a compound represented by Li_{2+d}M4₂₋ₑTi_{6-f}M5_{g}O_{14+σ} (where M4 is at least one selected from the group consisting of Sr, Ba, Ca, Mg, Na, Cs, Rb and K, M5 is at least one selected from the group consisting of Zr, Sn, V, Nb, Ta, Mo, W, Y, Fe, Co, Cr, Mn, Ni and Al, 0≤d≤6, 0≤e<2, 0≤f<6, 0≤g<6 and -0.5≤σ≤0.5). Examples of orthorhombic titanium-containing composite oxides include Li_{2+d}Na₂Ti₆O₁₄ (0≤d≤6).

Examples of metal composite oxides containing at least one element selected from the group consisting of P, V, Sn, Cu, Ni, Nb and Fe together with Ti include TiO₂-P₂O₅, TiO₂-V₂O₅, TiO₂-P₂O₅-SnO₂, and TiO₂-P₂O₅-Meₒ (where Me is at least one element selected from the group consisting of Cu, Ni and Fe).

Examples of metal sulfide serving as the negative electrode active material include titanium sulfides such as TiS₂, molybdenum sulfides such as MoS₂, and iron sulfides such as FeS, FeS₂ and LiₕFeS₂ (where the index h is 0.9≤h≤1.2).

Examples of metal nitrides serving as the negative electrode active material include lithium nitrides such as lithium cobalt nitrides, and examples of lithium cobalt nitrides include LiⱼCoₖN (0<j<4, 0<k<0.5). Examples of carbonaceous materials serving as the negative electrode active material include carbon fibers such as mesophase pitch carbon fiber (MCF).

As the electro-conductive agent contained in the negative electrode active material-containing layer, the same material as that of the electro-conductive agent contained in the positive electrode active material-containing layer may be used. As the binder contained in the negative electrode active material-containing layer, the same material as that of the binder contained in the positive electrode active material-containing layer may be used. If carboxymethyl cellulose is used as a binder, carboxymethyl cellulose also acts as a thickener.

In the negative electrode active material-containing layer, the mixing ratio of the negative electrode active material is preferably from 70% to 96% by mass, the mixing ratio of the electro-conductive agent is preferably from 2% to 20% by mass, and the mixing ratio of the binder is preferably from 2% to 10% by mass.

As the positive electrode current collector and the negative electrode current collector, foils containing metals such as aluminum and copper may be used. Examples of foils containing metals include foils of metal alloys such as aluminum alloy foils in addition to foils of one type of metal alone. Each current collector has a thickness of approximately 10 µm to 20 µm. The positive electrode current collector is provided with a portion to which the positive electrode active material-containing layer is not applied, and the negative electrode current collector is provided with a portion to which the negative electrode active material-containing layer is not applied.

### 2) Separator

The separator may be, but is not limited to, a microporous film, woven fabric, nonwoven fabric, or an inorganic film. Further, as the separator, a laminate in which one type or two or more types of the above-described members are laminated may be used. The separator may be formed to be independent from the electrodes (positive and negative electrodes), or may be formed to be integral with one of the electrodes. The separator is preferably a nonwoven fabric. As materials for forming the separator, fibers, ceramics, and the like may be used. Examples of fibers include polyolefins such as polyethylene and polypropylene, ethylene-propylene copolymer, ethylene-butene copolymer, cellulose, polyethylene terephthalate (PET), and polyamide imide (PAI). Examples of ceramics include alumina, titania, magnesium oxide, and lithium titanate.

The separator preferably has a thickness of from 2 µm to 15 µm. Further, the separator preferably has a void fraction of from 50% to 80%. It is more preferable that the separator be a nonwoven fabric and have a void fraction of from 50% to 80%.

### 3) Electrode Group

The electrode group is of a wound type or a laminated type. In the wound-type electrode group, the positive electrode, the negative electrode, and the separator are wound about a winding axis with the separator interposed between the positive electrode active material-containing layer and the negative electrode active material-containing layer. In the laminated-type electrode group, the positive electrodes and the negative electrodes are laminated alternately, and the separator is provided between the positive and negative electrodes.

In the positive electrode current collector, the strips are formed as a portion not supporting the positive electrode active material-containing layer, and the positive electrode current collector tab is formed as a portion in which the strips are bound in a state of being stacked. Further, in the negative electrode current collector, the strips are formed as a portion not supporting the negative electrode active material-containing layer, and the negative electrode current collector tab is formed as a portion in which the strips are bound in a state of being stacked. The positive electrode current collector tab and the negative electrode current collector tab protrude toward the same side in the electrode group. Each current collector tab has the root position of the protruding portion and the protruding end as described above. The positive electrode current collector tab and the negative electrode current collector tab are disposed to be apart from each other in the width direction of the electrode group. In the wound-type electrode group, each current collector tab protrudes toward one side in a direction along the winding axis.

The width Wc of the electrode group and the width Wt of each current collector tab are defined as described above. The ratio Wt/Wc is smaller than 0.50. It is preferable that in at least one of the current collector tabs, the ratio Wt/Wc be from 0.15 to 0.30. It is more preferable that the ratio Wt/Wc of each of the pair of current collector tabs be from 0.15 to 0.30.

### 4) Electrolyte

The electrolyte is held (impregnated) in the electrode group. As the electrolyte, an electrolytic solution may be used. The electrolytic solution may be a nonaqueous electrolytic solution obtained by dissolving an electrolyte salt in an organic solvent, or an aqueous electrolytic solution such as an aqueous solution.

Examples of electrolyte salts used for nonaqueous electrolytic solutions include lithium perchlorate (LiClO₄), lithium hexafluorophosphate (LiPF₆), lithium tetrafluoroborate (LiBF₄), lithium hexafluoroarsenate (LiAsF₆), and lithium trifluoromethanesulfonate (LiCF₃SO₃). As the electrolyte salt, one type may be used independently, or two or more types may be mixed. The concentration of an electrolyte salt, i.e., the dissolution amount of an electrolyte salt with respect to the organic solvent is preferably from 0.5 mol/L to 3 mol/L.

Examples of organic solvents used for nonaqueous electrolytic solutions include ethylene carbonate (EC), propylene carbonate (PC), butylene carbonate (BC), dimethyl carbonate (DMC), diethyl carbonate (DEC), ethyl methyl carbonate (EMC), γ-butyrolactone (γ-BL), sulfolane (SL), acetonitrile (AN), 1,2-dimethoxy ethane, 1,3-dimethoxy propane, dimethyl ether, tetrahydrofuran (THF), and 2-methyl tetrahydrofuran (2-MeTHF). As the organic solvent, one type may be used independently, or two or more types may be mixed.

As the electrolyte, a gel electrolyte may be used. Examples of gel electrolytes include gel nonaqueous electrolytes. The gel nonaqueous electrolyte is prepared by obtaining a composite of a nonaqueous electrolytic solution and a polymeric material. Examples of polymeric materials used for gel nonaqueous electrolytes include polyvinylidene fluoride (PVdF), polyacrylonitrile (PAN), polyethylene oxide (PEO), and mixtures thereof.

As the electrolyte, a room temperature molten salt (ionic melt) containing lithium ions, a polymer solid electrolyte, an inorganic solid electrolyte, or the like may be used.

The room temperature molten salt (ionic melt) indicates compounds among organic salts made of combinations of organic cations and anions, which are able to exist in a liquid state at room temperature (15°C to 25°C). The room temperature molten salt includes a room temperature molten salt which exists alone as a liquid, a room temperature molten salt which becomes a liquid upon mixing with an electrolyte salt, a room temperature molten salt which becomes a liquid when dissolved in an organic solvent, and mixtures thereof. The melting point of the room temperature molten salt used in secondary batteries is, for example, 25°C or below. The organic cations generally have a quaternary ammonium framework.

The polymer solid electrolyte is prepared by dissolving the electrolyte salt in a polymeric material and solidifying it. The inorganic solid electrolyte is a solid substance having Li ion conductivity. If a solid electrolyte such as a polymer solid electrolyte or an inorganic solid electrolyte is used as an electrolyte, a solid electrolyte is interposed between the positive electrode and the negative electrode instead of the separator in the electrode group. In this case, the solid electrolyte achieves electrical isolation between the positive electrode and the negative electrode.

### 5) Container Member

As the container member, for example, a container member made of laminate film or a container member made of metal may be used. The wall thickness of the container member made of metal is ,for example, 1mm or less, preferably 0.5mm or less, more preferably 0.2 mm or less. The container member made of metal is made, for example, of aluminum or an aluminum alloy. The aluminum alloy preferably contains elements such as magnesium, zinc, or silicon. If the aluminum alloy contains a transition metal such as iron, copper, nickel, or chromium, the content of the transition metal is preferably 100 ppm by mass or less. Examples of the container member made of metal include a container member formed by the container and the lid member as in the embodiment, etc. of FIG. 1.

The thickness of the laminate film used for the container member is, for example, 0.5 mm or less, preferably 0.2 mm or less. For the laminate film, a multilayer film including resin layers and a metal layer is used, and in the multi-layer film, the metal layer is interposed between the resin layers. The resin layer may include, for example, polymeric materials such as polypropylene (PP), polyethylene (PE), nylon, and polyethylene terephthalate (PET). The metal layer is preferably made of an aluminum foil or an aluminum alloy foil, in light of reduction in weight. The laminate film may be formed into the shape of a container member by heat-sealing.

The shape of the container member is not particularly limited. The shape of the container member may be, for example, flat (thin), square, or cylindrical, or coin- or button-shaped. The container member may be appropriately selected depending on battery size and use of the battery.

### 6) Electrode Terminals

The electrode terminals include the positive electrode terminal electrically connected to the positive electrode current collector tab, and the negative electrode terminal electrically connected to the negative electrode current collector tab. The positive electrode terminal may be made of a material that is electrically stable in the potential range of 3 V to 4.5 V (vs. Li/Li+) relative to the redox potential of lithium and has electrical conductivity. Examples of the material for the positive electrode terminal include aluminum or an aluminum alloy containing at least one selected from the group consisting of Mg, Ti, Zn, Mn, Fe, Cu, and Si. The positive electrode terminal is preferably made of the same material as the positive electrode current collector (positive electrode current collector tab).

The negative electrode terminal may be made of a material that is electrochemically stable at the Li occluding/releasing potential of the aforementioned negative electrode active material and has electrical conductivity. Examples of the material for the negative electrode terminal include copper, nickel, stainless steel, aluminum, and aluminum alloy containing at least one element selected from the group consisting of Mg, Ti, Zn, Mn, Fe, Cu, and Si. Aluminum or aluminum alloy is preferred as the material for the negative electrode terminal. The negative electrode terminal is preferably made of the same material as the negative electrode current collector.

### 7) Electric Conduction Structure between Electrode Group and each Electrode Terminal

The electric conduction structure on the positive electrode side electrically connecting the electrode group and the positive electrode terminal includes the positive electrode current collector tab and the positive electrode lead member. The electric conduction structure on the negative electrode side electrically connecting the electrode group and the negative electrode terminal includes the negative electrode current collector tab and the negative electrode lead member. As described above, the positive electrode current collector tab and the negative electrode current collector tab protrude toward the same side in the electrode group. Each current collector tab is connected to the corresponding one of the positive electrode lead member and the negative electrode lead member at the end on a side opposite to the root position of the protruding portion.

In one example, as in the embodiment, etc. of FIG. 3, in each current collector tab, the backup lead is attached to the end on a side opposite to the root position of the protruding portion. In this case, each current collector tab is sandwiched by the backup lead. Each lead member is connected to the corresponding one of the current collector tabs with a part of the backup lead sandwiched between the lead member and the corresponding one of the current collector tabs. Each lead member is bonded to the backup lead by ultrasonic welding or the like. Thus, in each lead member, a bonded portion bonded to the backup lead is formed at the part connected to the corresponding one of the current collector tabs.

In another embodiment, as in the modification, etc. of FIG. 4, each lead member is directly bonded to the corresponding one of the current collector tabs by ultrasonic welding or the like. In this case, in each lead member, a bonded portion bonded to the corresponding one of the current collector tabs is formed at the part connected to the corresponding one of the current collector tabs.

Each lead member is connected to the corresponding one of the positive electrode terminal and the negative electrode terminal at a position different from the part connected to the corresponding one of the current collector tabs. In one example, each electrode terminal is bonded to the corresponding one of the lead members by resistance welding, and each electrode terminal is connected to the corresponding one of the lead members.

The lead member is made of a material having an electrical conductivity such as a metal. The positive electrode lead member is preferably made of the same material as the positive electrode current collector tab, while the negative electrode lead member is preferably made of the same material as the negative electrode current collector tab. Thereby, the electrical resistance is reduced at the connected part between each current collector tab and the corresponding one of the lead members.

If provided, the backup lead is made of a material having an electrical conductivity such as a metal. If the positive electrode backup lead is attached to the positive electrode current collector tab, the positive electrode backup lead and the positive electrode lead member are preferably made of the same material as the positive electrode current collector tab. Thereby, the contact resistance between the positive electrode current collector tab and the positive electrode backup lead as well as the contact resistance between the positive electrode lead member and the positive electrode backup lead are reduced, and at the connected part between the positive electrode current collector tab and the positive electrode lead member, the electrical resistance is reduced. Similarly, if the negative electrode backup lead is attached to the negative electrode current collector tab, the negative electrode backup lead and the negative electrode lead are preferably made of the same material as the negative electrode current collector tab. Thereby, the electrical resistance is reduced at the connected part between the negative electrode current collector tab and the negative electrode lead member.

In the electric conduction structure on the positive electrode side electrically connecting the electrode group and the positive electrode terminal, it is preferable that all of the positive electrode current collector tab, the positive electrode lead member, and the positive electrode terminal be made of the same material. If the positive electrode backup lead is provided, it is preferable that all of the positive electrode current collector tab, the positive electrode lead member, the positive electrode terminal, and the positive electrode backup lead be made of the same material. Similarly, in the electric conduction structure on the negative electrode side electrically connecting the electrode group and the negative electrode terminal, all of the negative electrode current collector tab, the negative electrode lead member, and the negative electrode terminal are made of the same material. If the negative electrode backup lead is provided, it is preferable that all of the negative electrode current collector tab, the negative electrode lead member, the negative electrode terminal, and the negative electrode backup lead be made of the same material.

As described above, thickness Tt of each current collector tab and thickness Tl of each lead member are defined. In at least one of the electric conduction structure on the positive electrode side and the electric conduction structure on the negative electrode side, the lead member is thicker than the current collector tab. It is preferable that in at least one of the electric conduction structures, the ratio Tl/Tt be from 1.4 to 3.0. It is more preferable that in each of the electric conduction structures on the positive electrode side and the negative electrode side, the ratio Tl/Tt be from 1.4 to 3.0.

Further, in at least one of the positive electrode current collector tab or the negative electrode current collector tab, the tab bent portion is formed between the root position of the protruding portion and the position connected to the corresponding one of the lead members. The current collector tab is bent at the tab bent portion. It is preferable that each of the pair of the current collector tabs be provided with the tab bent portion. For each electric conduction structure, the linear distance D is defined as described above, and for each current collector tab, the extending length Lt is defined as describe above. In at least one of the electric conduction structure on the positive electrode side and the electric conduction structure on the negative electrode side, the ratio Lt/D is larger than 1. It is preferable that in at least one of the pair of electric conduction structures, the ratio Lt/D be from 3 to 6. It is more preferable that in each of the pair of electric conduction structures, the ratio Lt/D be from 3 to 6.

The width Wc of the electrode group and the width Wt of each current collector tab can be measured, for example, as follows. The following method is used when the width Wc, etc. of the electrode group are measured in the nonaqueous electrolyte battery as the battery using the nonaqueous electrolyte for the electrolyte. For measuring the widths Wc, Wt, etc., the following pre-treatment is carried out before measurement.

In the pre-treatment before measurement, a nonaqueous electrolyte battery is disassembled in a glove box filled with argon gas, and an electrode to be measured (positive electrode or negative electrode) is taken out from the nonaqueous electrolyte battery. In the following description, the electrode to be measured will be referred to as a target electrode. Next, the taken-out target electrode is washed with methyl ethyl carbonate (MEC). The washed target electrode is dried at a temperature of 25°C and under an atmosphere having a gauge pressure of -90 Pa. Then, the dried target electrode is measured and analyzed as follows.

In measurement of the width Wt of the current collector tab, the target electrode is taken out by the pre-treatment described above. For the target electrode, width Wt (dimension along the width direction of the electrode group) of the portion to which the active material-containing layer (positive or negative electrode active material-containing layer) is not applied is measured. The width direction of the current collector tab is defined as described above, and intersects (is perpendicular or substantially perpendicular to) the protruding direction of the current collector tab. Measurement is performed using a digital caliper, and the dimension up to the second decimal place is measured in units of mm.

In measurement of the width Wc of the electrode group, the electrode group is taken out from the container member. The taken-out electrode group is left standing for about a week until the electrolyte is completely volatilized in the organic draft. Thereafter, 400 g of load is applied to the electrode group by, for example, pinching the electrode group with a plate from both sides in the thickness direction of the electrode group. The width Wc of the electrode group (dimension of the electrode group along the width direction of the electrode group) is measured while 400 g of the load is being applied. The width direction of the electrode group is defined as described above, and intersects (is perpendicular or substantially perpendicular to) the protruding direction of the current collector tab. Further, the width direction of the electrode group intersects (is perpendicular or substantially perpendicular to) the thickness direction of the electrode group. Measurement is performed using a digital caliper, and the dimension up to the second decimal place is measured in units of mm.

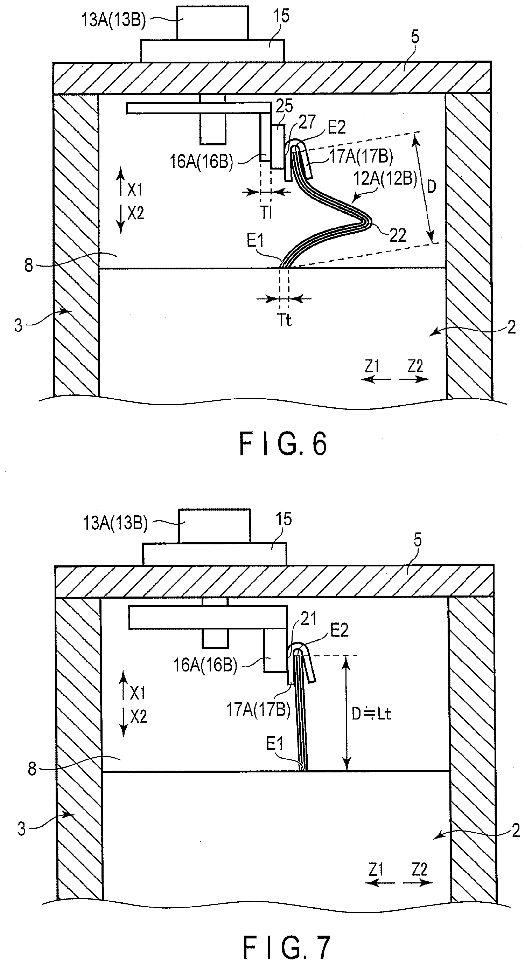

With regard to the electric conduction structure between the electrode group and the electrode terminal, a first comparative structure with respect to the above-described embodiment, etc. is shown in FIGS. 5 and 6. In the first comparative structure also, as in the above-described embodiment, etc., a protruding direction of the current collector tabs 12 (direction indicated by arrow X1), a width direction of the electrode group 2 (direction indicated by arrows Y1 and Y2), a thickness direction of the electrode group 2 (direction indicated by arrows Z1 and Z2), and the like are defined. FIG. 5 shows the electrode group 2 viewed from one side in the thickness direction (arrow Z1 side), whereas FIG. 6 shows the electrode group 2 viewed from one side in the width direction (internal side in the width direction). In the first comparative structure also, as in the above-described embodiment, etc., the current collector tab 12 has the root position E1 of the protruding portion and the connected position E2 at the protruding end or in the vicinity thereof, and in the current collector tab 12, the tab bent portion 22 is formed between the root position E1 and the connected position E2.

However, in the first comparative structure, an intermediate lead 25 made of an electro-conductive material is provided in the electric conduction structure. The current collector tab 12 is connected to the intermediate lead 25 at the connected position E2. Thus, the intermediate lead 25 is bonded to the backup lead 17 or the current collector tab 12 by ultrasonic welding or the like at the part connected to the current collector tab 12. In the structure illustrated in FIGS. 5 and 6, the electric conduction structure is provided with the backup lead 17, and in the intermediate lead 25, the bonded portion 27 bonded to the backup lead 17 is formed at the part connected to the current collector tab 12.

In the first comparative structure, the intermediate lead 25 is adjacent to the lead member 16 in the thickness direction of the electrode group 2. The intermediate lead 25 and the lead member 16 are arranged while being stacked in the thickness direction of the electrode group 2. The intermediate lead 25 is connected to the lead member 16 at a position different (apart) from the part connected to the current collector tab 12. In the first comparative structure, the intermediate lead 25 is connected to the lead member 16 by resistance welding or the like at both edges in the width direction of the electrode group 2. In the lead member 16, a bonded portion 26A bonded to the intermediate lead 25 is formed at the edge on a side in the width direction of the electrode group 2, while a bonded portion 26B bonded to the intermediate lead 25 is formed at the edge on the side opposite to the bonded portion 26A in the width direction of the electrode group 2. In the first comparative structure, the lead member 16 is connected to the electrode terminal 13 at a position different from the part connected to the intermediate lead 25, i.e., at a position away from the bonded portion 26A or 26B.

In the first comparative structure, the intermediate lead 25 is provided. Thus, in the electric conduction structure between the electrode group and the electrode terminal, a path length of a current path is longer than that in the above-described embodiment, etc. Thus, in the first comparative structure, the electrical resistance of the electric conduction structure is higher than that in the above-described embodiment, etc. Thus, the battery of the first comparative structure is likely to exhibit a lower output performance as compared to that in the above-described embodiment, etc.

A battery may involve an external short circuit caused when a metal piece or the like comes into contact with a pair of electrode terminals, leading to the pair of electrode terminals being electrically connected without the electrode group interposed therebetween. If the external short circuit is caused in the battery as described above, an excessive current may flow through the battery.

In the first comparative structure, in each connected part (bonded portions 26A and 26B) of the lead member 16 connected to the intermediate lead 25, the contact area of the lead member 16 and the intermediate lead 25 is small. Thus, when the excessive current flows through the battery 1 due to the external short circuit or the like, the bonded portions 26A and 26B of the lead member 16 bonded to the intermediate lead 25 are melted before the current collector tab 12 is melted, leading to the lead member 16 being not connected to the intermediate lead 25. Thus, the electrode group 2 is brought to a state of being not electrically connected to the electrode terminal 13. When the bonded portions 26A and 26B of the lead member 16 bonded to the intermediate lead 25 are melted, even if the battery 1 is left standing for a certain period of time, the lead member 16 is not fused with the intermediate lead 25. Thus, even if a certain period of time has elapsed since the bonded portions 26A and 26B of the lead member 16 bonded to the intermediate lead 25 were melted, a state in which the electrode group 2 is not electrically connected to the electrode terminal 13 is maintained.

In the first comparative structure, because the intermediate lead 25 is provided, the lead member 16 is formed to be thinner than that in the above-described embodiment, etc. For example, the thickness Tl of the lead member 16 is the same or substantially the same as the thickness Tt of the current collector tab 12. In this case, the ratio Tl/Tt of the thickness Tl of the lead member 16 to the thickness Tt of the current collector tab 12 is 1 or substantially 1.

With regard to the electric conduction structure between the electrode group and the electrode terminal, a second comparative structure with respect to the above-described embodiment, etc. is shown in FIG. 7. FIG. 7 shows the electrode group 2 viewed from one side in the width direction (internal side in the width direction). In the second comparative structure, the electric conduction structure is formed as in the above-described embodiment, etc. except that the tab bent portion 22 is not formed in the current collector tab 12. Since the second comparative structure is not provided with the tab bent portion 22, the current collector tab 12 extends linearly or substantially linearly from the root position E1 to the connected position E2.

Here, a linear distance D between the root position E1 of the current collector tab 12 and the connected position E2 of the current collector tab 12 connected to the lead member 16, and an extending length Lt of the current collector tab 12 from the root position E1 to the connected position E2, are defined as described above. Since the second comparative structure is not provided with the tab bent portion 22 in the current collector tab 12, the linear distance D is equal to or substantially equal to the extending length Lt. Therefore, the ratio Lt/D of the extending length Lt to the linear distance D is 1 or substantially 1.

In the second comparative structure, as in the above-described embodiment, etc., the lead member 16 is thicker than the current collector tab 12. Thus, if the excessive current flows through the battery 1 due to the external short circuit or the like, the current collector tab 12 is melted before the lead member 16 or the like is melted. As a result, the electrode group 2 is brought to a state of being not electrically connected to the electrode terminal 13. In the second comparative structure, the tab bent portion 22 is not provided in the current collector tab 12, and the linear distance D is equal to or substantially equal to the extending length Lt. Therefore, even if the battery 1 is allowed to stand for a certain period of time after the current collector tab 12 is melted, the melted portion of the current collector tab 12 is not fused. Thus, even when a certain period of time has elapsed since the current collector tab 12 was melted, a state in which the electrode group 2 is not electrically connected to the electrode terminal 13 is maintained.

According to the above-described embodiment, etc., in the electric conduction structure between the electrode group 2 and the electrode terminal 13 (e.g., at least one of the electric conduction structure on the positive electrode side and that on the negative electrode side), the lead member 16 is formed to be thicker than the current collector tab 12. Therefore, if an excessive current flows through the battery 1, the current collector tab 12 is more easily melted by heat than the lead member 16.

The current collector tab 12 is connected to the lead member 16 at the connected position E2 on the side opposite to the root position E1, and the lead member 16 is connected to the electrode terminal 13 at the position different from the connected position connected to the current collector tab 12. Therefore, the electric conduction structure of the embodiment, etc. is not provided with the intermediate lead 25 or the like of the first comparative structure. Accordingly, the electric conduction structure of the embodiment, etc. is not provided with a portion that is more easily melted than the current collector tab 12 by the excessive current, such as the bonded portions 26A and 26B of the lead member 16 bonded to the intermediate lead 25 in the first comparative structure.

Because of the above-described structure, in the electric conduction structure of the embodiment, etc., when an excessive current flows through the battery 1, the current collector tab 12 is melted by heat. Thereby, the excessive current is cut off in the battery 1, and an increase in heat generation in the electrode group 2, etc. can be suppressed as appropriate.

Further, in the energization structure of the embodiment, etc., the tab bent portion 22 is provided in the current collector tab 12. That is, in the current collector tab 12, the above-described ratio Lt/D of the extending length Lt to the linear distance D is larger than 1. Because of such a structure, by allowing the battery 1 to stand for a certain period of time after the current collector tab 12 is melted as described above by the excessive current, the heat generated in the battery 1 is released, and the melted portion of the current collector tab 12 is fused. As a result, if a certain period of time has elapsed since the current collector tab 12 was melted, the electrode group 2 is electrically connected to the electrode terminal 13 again. Therefore, the battery 1 can be discharged after the current collector tab 12 is melted and the excessive current is cut off. Thereby, it is possible to recover the battery 1 after the battery 1 is discharged to a complete discharge state where the state of charge (SOC) is, for example, 0% after the current (excessive current) is cut off, and to recover the battery 1 more safely.

Further, in each electric conduction structure between the electrode group 2 and the electrode terminal 13, by setting the ratio Tl/Tt of the thickness Tl of the lead member 16 to the thickness Tt of the current collector tab 12 to 1.4 or more, the electrical resistance is further lowered. Thus, in at least one of the pair of electric conduction structures, by setting the ratio Tl/Tt to 1.4 or more, the current flowing through the battery 1 can be large in normal use of the battery 1, and the output performance and input performance of the battery 1 are improved. In both of the pair of electric conduction structures, by setting the ratio Tl/Tt to 1.4 or more, the output performance and input performance in normal use are further improved. In each electric conduction structure, by setting the ratio Tl/Tt to 1.4 or more, generation of voids between strips 18 in each current collector tab 12 is effectively prevented when the excessive current flows. Therefore, when the excessive current flows, heat released from each current collector tab 12 is suppressed, and melting of the lead member 16, etc. before the current collector tab 12 is melted is effectively prevented.

Further, in at least one of the pair of electric conduction structures, by setting the above-described ratio Tl/Tt to 3.0 or less, the excessive current flowing through the battery 1 until the current collector tab 12 is melted as described above is suppressed. Therefore, an amount of heat generated in the battery 1 until the excessive current is cut off is suppressed. In both of the pair of the electric conduction structures, by setting the ratio Tl/Tt to 3.0 or less, an amount of heat generated in the battery 1 until the excessive current is cut off is further suppressed. In each electric conduction structure, by setting the ratio Tl/Tt to 3.0 or less, in manufacturing the battery 1, each current collector tab 12 is easily connected to the corresponding one of the lead members 16 by welding or the like. In each electric conduction structure, by setting the ratio Tl/Tt to 3.0 or less, the electrical resistance of the part connected to the current collector tab 12 of the corresponding one of the lead members 16 is ensured to be low.

Further, in each electric conduction structure, by setting the above-described ratio Lt/D of the extending length Lt to the linear distance D to 3 or more, the melted portion of the current collector tab 12 becomes easily fused after the current collector tab 12 is melted. Therefore, in at least one of the pair of electric conduction structures, by setting the ratio Lt/D to 3 or more, the battery 1 can be discharged reliably after the excessive current is cut off. In both of the pair of the electric conduction structures, by setting the ratio Lt/D to 3 or more, the battery 1 can be discharged more reliably after the excessive current is cut off.

Further, in each electric conduction structure, by setting the above-described ratio Lt/D of the extending length Lt to the linear distance D to 6 or less, the contact of the current collector tab 12 to portions other than the current collector tab 12 of the electrode group 2 is effectively prevented. Therefore, in at least one of the pair of electric conduction structures, by setting the ratio Lt/D to 6 or less, occurrence of an internal short circuit in the battery 1 is effectively prevented. In both of the pair of electric conduction structures, by setting the ratio Lt/D to 6 or less, occurrence of an internal short circuit in the battery 1 is more effectively prevented.

In each electric conduction structure between the electrode group 2 and the electrode terminal 13, by setting the above-described ratio Wt/Wc of the width Wd of the current collector tab 12 to the width Wc of the electrode group 2 to 0.15 or more, the electrical resistance is further lowered. Thus, in at least one of the pair of electric conduction structures, by setting the above-described ratio Wt/Wc to 0.15 or more, the current flowing through the battery 1 can be large in normal use of the battery 1, and the output performance and input performance of the battery 1 are improved. In both of the pair of electric conduction structures, by setting the ratio Wt/Wc to 0.15 or more, the output performance and input performance in normal use are further improved. In each electric conduction structure, by setting the above-described ratio Wt/Wc to 0.15 or more, when the excessive current flows through the battery 1, the current flowing through the current collector tab 12 becomes large, and the current collector tab 12 is easily melted. In each electric conduction structure, by setting the ratio Wt/Wc to 0.15 or more, the cross-sectional area of each current collector tab 12 becomes a certain size, and the electrical resistance in each current collector tab 12 is secured to be somewhat small. As a result, when a somewhat larger current flows, heat generated in each current collector tab 12 is prevented from becoming excessively high, and deterioration, etc. of the insulating member electrically insulating the electric conduction structures from the container 3 and the lid member 5 are effectively prevented.

In both of the pair of electric conduction structures, by setting the ratio Wt/Wc to 0.30 or less, the contact of the positive electrode current collector tab 12A to the negative electrode current collector tab 12B as well as discharging between the current collector tabs 12A and 12B and the like are effectively prevented. As a result, a short circuit between the current collector tabs 12A and 12B is effectively prevented, and occurrence of an internal short circuit in the battery 1 is effectively prevented.

Further, by making each current collector tab 12 of the same material as that of the corresponding one of the lead members 16, the electrical resistance is reduced at the connected part between each current collector tab 12 and the corresponding one of the lead members 16. If each electric conduction structure is provided with the backup lead 17, by making the backup lead 17 and the lead member 16 of the same material as that of the current collector tab 12, the contact resistance between the current collector tab 12 and the backup lead 17 as well as the contact resistance between the lead member 16 and the backup lead 17 are reduced. As a result, the electrical resistance is reduced at the connected part between each current collector tab 12 and the corresponding one of the lead members 16.

In the battery 1 formed as described above, it is preferable that the volume energy density be from 100 W•h/L to 200 W•h/L. With a volume energy density of 100 W•h/L or more, the battery 1 can be used for a long time without charging in normal use, etc. Further, if the volume energy density is 200 W•h/L or less, the discharge time of the battery 1 is shortened, after the excessive current is cut off by melting of the current collector tab 12 and then the melted portion of the current collector tab 12 is fused as described above. That is, after the current (excessive current) is cut off, the battery 1 can be discharged in a short period of time up to a complete discharge state where the state of charge (SOC) is 0%.

### [Verification Relating To Embodiment, etc.]

The following verification relating to the above-described embodiment, etc. was conducted. The verification was conducted for each of Examples 1 to 10 and Comparative Examples 1 and 2. The conditions in each of Examples 1 to 10 and Comparative Examples 1 and 2 will be described with reference to Table 1. In Table 1, the conditions shared by all Examples 1 to 10 and Comparative Examples 1 and 2 are omitted.

**Table 1**

| | Positive electrode side | Negative electrode side | | | Electric conduction structure | Wt/Wc | Tl/Tt | Lt/D |
|---|---|---|---|---|---|---|---|---|
| | Weight per unit [g/m²] | Active material | Weight per unit [g/m²] | Material of current collector tab, etc. | | | | |
| Example 1 | 60 | Li₄Ti₅O₁₂ | 60 | Aluminum | Electric conduction structure α0 | 0.20 | 2.5 | 5.5 |
| Example 2 | 60 | Li₄Ti₅O₁₂ | 60 | Aluminum | Electric conduction structure α0 | 0.20 | 3.0 | 5.5 |
| Example 3 | 60 | MCF | 30 | Copper | Electric conduction structure α0 | 0.20 | 2.5 | 5.5 |
| Example 4 | 75 | Li₄Ti₅O₁₂ | 75 | Aluminum | Electric conduction structure α0 | 0.20 | 2.5 | 5.5 |
| Example 5 | 60 | Li₄Ti₅O₁₂ | 60 | Aluminum | Electric conduction structure α0 | 0.20 | 1.2 | 5.5 |
| Example 6 | 60 | Li₄Ti₅O₁₂ | 60 | Aluminum | Electric conduction structure α0 | 0.20 | 5.0 | 5.5 |
| Example 7 | 60 | Li₄Ti₅O₁₂ | 60 | Aluminum | Electric conduction structure α0 | 0.20 | 2.5 | 1.5 |
| Example 8 | 60 | Li₄Ti₅O₁₂ | 60 | Aluminum | Electric conduction structure α0 | 0.20 | 2.5 | 10 |
| Example 9 | 60 | Li₄Ti₅O₁₂ | 60 | Aluminum | Electric conduction structure α0 | 0.10 | 2.5 | 5.5 |
| Example 10 | 60 | Li₄Ti₅O₁₂ | 60 | Aluminum | Electric conduction structure α0 | 0.45 | 2.5 | 5.5 |
| Comparative Example 1 | 60 | Li₄Ti₅O₁₂ | 60 | Aluminum | Electric conduction structure α1 | 0.20 | 1.0 | 5.5 |
| Comparative Example 2 | 60 | Li₄Ti₅O₁₂ | 60 | Aluminum | Electric conduction structure α2 | 0.20 | 2.5 | 1.0 |

### (Example 1)

In Example 1, a battery was formed as follows. To form a battery, first, a positive electrode was formed as follows. To form a positive electrode active material-containing layer of the positive electrode, a lithium-containing nickel-cobalt-manganese composite oxide LiNi_{0.8}Co_{0.1}Mn_{0.1}O₂ formed by secondary particles was used as a positive electrode active material. In the positive electrode active material at the preparation stage, the average secondary particle diameter was 6 µm, while the average primary particle diameter was 0.5 µm. In the positive electrode active material-containing layer, acetylene black was used as an electro-conductive agent, and polyvinylidene fluoride was used as a binder. The above-described positive electrode active material, electro-conductive agent, and binder were dissolved and mixed in N-methylpyrrolidone (NMP) at a weight ratio of 93:5:2, thereby preparing a paste. In this manner, a dispersion solution in the form of a paste was prepared as a positive electrode coating fluid.

As the positive electrode current collector, a plate-shaped aluminum foil having a thickness of 12 µm was used. To form the positive electrode, the aforementioned positive electrode coating fluid was uniformly applied to both surfaces of the aluminum foil. The coating film of the positive electrode coating fluid applied to the aluminum foil was dried, thereby forming a positive electrode active material-containing layer. At this time, the positive electrode active material-containing layer was formed so that the weight per unit area of one surface was 60g/m². A plate-shaped body (aluminum foil) in which the positive electrode active material-containing layer was formed was press-rolled by roll pressing. The press-rolled positive electrode was cut into a predetermined size. The cut positive electrode was formed to be plate-shaped along the longitudinal direction. In the positive electrode current collector of the cut positive electrode, strips not supporting the positive electrode active material-containing layer were formed, and the strips were formed to be apart from each other in the longitudinal direction of the positive electrode. The strips were formed to protrude toward the same side in the direction intersecting the longitudinal direction.

In addition, to form the battery, a negative electrode was formed as follows. To form a negative electrode active material-containing layer of the negative electrode, lithium titanate Li₄Ti₅O₁₂ having a spinel structure of a primary particle shape was used as a negative electrode active material. In the negative electrode active material at the preparation stage, the average particle diameter was 0.5 µm. In the negative electrode active material-containing layer, graphite was used as an electro-conductive agent, and polyvinylidene fluoride was used as a binder. The above-described negative electrode active material, electro-conductive agent, and binder were dissolved and mixed in N-methylpyrrolidone (NMP) at a weight ratio of 90:5:5, thereby preparing a paste. In this manner, a dispersion solution in the form of a paste was prepared as a negative electrode coating fluid.

As the negative electrode current collector, a plate-shaped aluminum foil having a thickness of 15 µm was used. To form the negative electrode, the aforementioned negative electrode coating fluid was uniformly applied to both surfaces of the aluminum foil. The coating film of the negative electrode coating fluid applied to the aluminum foil was dried, thereby forming a negative electrode active material-containing layer. At this time, the negative electrode active material-containing layer was formed so that the weight per unit area of one surface was 60 g/m². A plate-shaped body (aluminum foil) in which the negative electrode active material-containing layer was formed was press-rolled by roll pressing. The press-rolled negative electrode was cut into a predetermined size. The cut negative electrode was formed to be plate-shaped along the longitudinal direction. In the negative electrode current collector of the cut negative electrode, strips not supporting the negative electrode active material-containing layer were formed, and the strips were formed to be apart from each other in the longitudinal direction of the negative electrode. The strips were formed to protrude toward the same side in the direction intersecting the longitudinal direction.

As the separator electrically insulating the positive electrode and the negative electrode, a cellulose nonwoven fabric was used. The separator had a thickness of 10 µm and a void fraction of 60%. To form the electrode group, the positive electrode and the negative electrode were stacked with the separator interposed therebetween. At this time, the separator, the positive electrode, the separator, and the negative electrode were laminated in this order, thereby forming a laminate. The laminate was wound, thereby forming an electrode group. To form the electrode group, the laminate was wound so that the separator was positioned at the outermost periphery. Then, a wound body in which the laminate was wound was pressed while being heated, thereby forming a wound-type electrode group.

In the electrode group formed, the above-described strips of the positive electrode current collector were bound while being stacked, thereby forming a positive electrode current collector tab. Then, the above-described strips of the negative electrode current collector were bound while being stacked, thereby forming a negative electrode current collector tab. In the electrode group, the positive electrode current collector tab and the negative electrode current collector tab were formed to protrude toward to the same side. The positive electrode current collector tab and the negative electrode current collector tab were formed to have the same width (dimension along the width direction of the electrode group). If width Wc of the electrode group and width Wt of each current collector tab were defined as described above, the electrode group formed had the ratio Wt/Wc of 0.2.

For an electrolyte held (impregnated) in the electrode group, a nonaqueous electrolytic solution was used. To prepare the nonaqueous electrolytic solution, a mixed solvent was prepared by mixing propylene carbonate and ethyl methyl carbonate at a volume ratio of 1:2. LiPF₆ as an electrolyte salt was dissolved in the mixed solvent to have a concentration of 1.0 mol/L, thereby preparing a nonaqueous electrolytic solution.

The electric conduction structure between each of the pair of electrode terminals (positive electrode terminal and negative electrode terminal) and the electrode group was similar to that of the embodiment of FIGS. 1 to 3. In the following description, the electric conduction structure of the embodiment of FIGS. 1 to 3 is referred to as electric conduction structure α0. Because the structure was similar to the electric conduction structure α0, each current collector tab (positive electrode current collector tab or negative electrode current collector tab) was connected to the corresponding one of the lead members at the end on the opposite side relative to the root position of the protruding portion. Each current collector tab was connected to the corresponding one of the lead members with the corresponding one of the backup leads interposed therebetween. Each lead member (positive electrode lead member or negative electrode lead member) was connected to the corresponding one of the electrode terminals at a position different from the part connected to the corresponding one of the current collector tabs. Further, because the structure was similar to the electric conduction structure α0, each current collector tab was provided with the tab bent portion described above.

The positive electrode terminal, the positive electrode lead member, and the positive electrode backup lead were made of the same material as the positive electrode current collector tab. The negative electrode terminal, the negative electrode lead member, and the negative electrode backup lead were made of the same material as the negative electrode current collector tab. As a result, the electrode terminals, the lead members, and the backup leads were made of aluminum. Each lead member was connected to the corresponding one of the current collector tabs by being connected to the backup lead by ultrasonic welding. Further, each lead member was connected to the corresponding one of the electrode terminals by resistance welding.

The positive electrode current collector tab and the negative electrode current collector tab were formed to have the same thickness. The positive electrode lead member and the negative electrode lead member were formed to have the same thickness. If the thickness Tt of each current collector tab and the thickness Tl of each lead member were defined as described above, the ratio Tl/Tt was 2.5.

For the container member, as in the embodiment, etc. of FIGS. 1 to 3, the container member formed by the container and the lid member was used. The container and the lid member were made of aluminum. To form the battery, the electrode group was housed in the inner cavity of the container, and the lid member was attached to the container by seam welding. Thereby, the inner cavity in which the electrode group was arranged was sealed. Before each lead member was connected to the corresponding one of the current collector tabs, the lead member was integrated with the lid member, the electrode terminal, the insulating member, and the like.

To form the battery, it was examined through the X-ray image that the above-described tab bent portion was formed in each current collector tab. Further, if the linear distance D and the extending length Lt were defined as described above, each current collector tab had the ratio Lt/D of 5.5. To form the battery, the nonaqueous electrolytic solution was poured into the inner cavity while the electrode group was disposed in the inner cavity of the container and the electrode group was electrically connected to each of the pair of the electrode terminals. After the nonaqueous electrolytic solution was poured, the inner cavity was sealed, thereby forming a battery.

### (Example 2)

In Example 2, in each of the pair of electric conduction structures, the ratio Tl/Tt of the thickness Tl of the lead member to the thickness Tt of the current collector tab was set to 3.0. Except for the above, the battery was formed as in Example 1.

### (Example 3)

In Example 3, the negative electrode was formed as follows. To form a negative electrode active material-containing layer of the negative electrode, mesophase pitch carbon fiber (MCF) was used as a negative electrode active material. For the negative electrode active material-containing layer, graphite was used as an electro-conductive agent, styrene-butadiene rubber (SBR) was used as a binder, and carboxymethyl cellulose (CMC) was used a thickener. The above-described negative electrode active material, electro-conductive agent, binder, and thickener were dissolved and mixed in water at a weight ratio of 85:10:3:2, thereby preparing a paste. In this manner, a dispersion solution in the form of a paste was prepared as a negative electrode coating liquid.

As the negative electrode current collector, a plate-shaped copper foil having a thickness of 15 µm was used. To form the negative electrode, the aforementioned negative electrode coating fluid was uniformly applied to both surfaces of the copper foil. The coating film of the negative electrode coating fluid applied to the copper foil was dried, thereby forming a negative electrode active material-containing layer. At this time, the negative electrode active material-containing layer was formed so that the weight per unit area of one surface was 30 g/m². A plate-shaped body (aluminum foil) in which the negative electrode active material-containing layer was formed was press-rolled by roll pressing. The press-rolled negative electrode was cut into a predetermined size. In the cut negative electrode, strips were formed as in Example 1. Then, the strips of the negative electrode current collector were bound while being stacked, thereby forming a negative electrode current collector tab.

Since the negative electrode current collector tab was made of copper, the negative electrode terminal, the negative electrode lead member, and the negative electrode backup lead were made of copper, the same material as the negative electrode current collector tab. Except for the above, the battery was formed as in Example 1.

### (Example 4)

In Example 4, the positive electrode active material-containing layer was formed so that the weight per unit area of one surface was 75g/m². The negative electrode active material-containing layer was formed so that the weight per unit area of one surface was 75g/m². Therefore, in Example 4, the positive electrode and the negative electrode were each formed to be thicker than those in Example 1. In Example 4, the dimension (thickness) of the electrode group along the thickness direction of the electrode group and the dimension (width) of the electrode group along the width direction of the electrode group were the same or substantially the same as those in Example 1. Thus, in Example 4, the number of winding times in the electrode group was reduced as compared to that in Example 1. Other than the above, the battery was formed as in Example 1.

### (Example 5)

In Example 5, in each of the pair of electric conduction structures, the ratio Tl/Tt of the thickness Tl of the lead member to the thickness Tt of the current collector tab was set to 1.2. Except for the above, the battery was formed as in Example 1.

### (Example 6)

In Example 6, in each of the pair of electric conduction structures, the ratio Tl/Tt of the thickness Tl of the lead member to the thickness Tt of the current collector tab was set to 5.0. Other than the above, the battery was formed as in Example 1.

### (Example 7)

In Example 7, in each of the pair of current collector tabs, the above-described ratio Lt/D of the extending length Lt to the linear distance D was set to 1.5. Except for the above, the battery was formed as in Example 1.

### (Example 8)

In Example 8, in each of the pair of current collector tabs, the above-described ratio Lt/D of the extending length Lt to the linear distance D was set to 10. Except for the above, the battery was formed as in Example 1.

### (Example 9)

In Example 9, in each of the pair of current collector tabs, the above-described ratio Wt/Wc of the width Wt to the width Wc of the electrode group was set to 0.10. Except for the above, the battery was formed as in Example 1.

### (Example 10)

In Example 10, in each of the pair of current collector tabs, the above-described ratio Wt/Wc of the width Wt to the width Wc of the electrode group was set to 0.45. Except for the above, the battery was formed as in Example 1.

### (Comparative Example 1)

In Comparative Example 1, the electric conduction structure between each of the pair of electrode terminals (positive electrode terminal and negative electrode terminal) and the electrode group was similar to that of the first comparative structure of FIGS. 5 and 6. In the following description, the electric conduction structure of the first comparative structure of FIGS. 5 and 6 is referred to as electric conduction structure α1. In the electric conduction structure α1, the above-described intermediate lead was provided between the lead member and the current collector tab. Thus, in Comparative Example 1, each of the current collector tabs (positive electrode current collector tab and negative electrode current collector tab) was connected to the corresponding one of the intermediate leads at the end on the opposite side relative to the root position of the protruding portion. Each current collector tab was connected to the corresponding one of the intermediate leads with the backup lead interposed therebetween. Each intermediate lead was connected to the corresponding one of the lead members (positive electrode lead member and negative electrode lead member) at a position different from the part connected to the corresponding one of the current collector tabs. Each lead member was connected to a corresponding one of the electrode terminals at a position different from the part connected to the corresponding one of the intermediate leads. Further, in the electric conduction structure α1, as in the electric conduction structure α0, the above-described tab bent portion was formed in the current collector tab.

The positive electrode terminal, the positive electrode lead member, the positive electrode backup lead, and the intermediate lead on the positive electrode side were made of the same material as the positive electrode current collector tab. The negative electrode terminal, the negative electrode lead member, the negative electrode backup lead, and the intermediate lead on the negative electrode side were made of the same material as the negative electrode current collector tab. In Comparative Example 1, as in Example 1, each current collector tab was made of aluminum. As a result, the electrode terminals, the lead members, the backup leads and the intermediate leads were made of aluminum. Each intermediate lead was connected to the corresponding one of the current collector tabs by being connected to the backup lead by ultrasonic welding. Each lead member was connected to the corresponding one of the electrode terminals by resistance welding.

In the electric conduction structure α1, the intermediate lead and the lead member were arranged in a state of being stacked in the thickness direction of the electrode group. The intermediate lead was connected to the lead member by resistance welding at both edges in the width direction of the electrode group. In Comparative Example 1, since the intermediate lead was provided, the lead member was thinner than that in Example 1. Further, in Comparative Example 1, in each of the electric conduction structures, the ratio Tl/Tt of the thickness Tl of the lead member to the thickness Tt of the current collector tab was 1.0. Other than the above, the battery was formed as in Example 1.

### (Comparative Example 2)

In Comparative Example 2, the electric conduction structure between each of the pair of electrode terminals (positive electrode terminal and negative electrode terminal) and the electrode group was similar to that of the second comparative structure of FIG. 7. In the following description, the electric conduction structure of the second comparative structure of FIG. 7 is referred to as electric conduction structure α2. The electric conduction structure α2 was similar to the electric conduction structure α0 except that the tab bent portion was not formed in the current collector tab. In Comparative Example 2, it was examined through the X-ray image that the above-described tab bent portion was not formed in each current collector tab, i.e., each current collector tab was extending linearly or substantially linearly from the root position to the position connected to the corresponding one of the lead members. In Comparative Example 2, in each of the pair of current collector tabs, the above-described ratio Lt/D of the extending length Lt to the linear distance D was 1.0. Except for the above, the battery was formed as in Example 1.

### (Verification Content)

In verification, for each of Examples 1 to 10 and Comparative Examples 1 and 2, resistance value R between the pair of electrode terminals (positive electrode terminal and negative electrode terminal) was measured before the nonaqueous electrolytic solution was poured into the inner cavity at the time of manufacturing the battery. Measurement of the resistance value R was conducted while the electrode group was disposed in the inner cavity of the container and the electrode group was electrically connected to each of the pair of the electrode terminals. As the resistance value R, a resistance value when the voltage of 50 V was applied between the electrode terminals for 3 seconds was measured.

In verification, for each of Examples 1 to 10 and Comparative Examples 1 and 2, the volume energy density of the manufactured battery was calculated. At this time, the battery was charged under the temperature environment of 25°C for Examples 1 to 3 and 5 to 10 and Comparative Examples 1 and 2. The battery was charged at a constant current of 1 C until the voltage reached 2.7 V. After constant current charging, the battery was charged at a constant voltage until the current value reached 0.01 C while the voltage was maintained at 2.7 V. That is, the battery manufactured was subjected to constant current-constant voltage charging under the above-described conditions. After the constant voltage charging was performed, the battery was stored under a high temperature of 50°C or more for 24 hours. After storage under the high temperature, the battery was stored under the temperature environment of 25°C for 5 hours. Then, the battery was discharged at a constant current of a 1 C discharge rate until the voltage reached 1.5 V. The energy discharged during the constant current discharge was calculated, and the calculated energy was divided by the volume of the container member (the container and the lid member), thereby obtaining volume energy density U of the battery.

In Example 4, the battery was charged under the temperature environment of 25°C. At this time, the battery was charged at a constant current of a 1 C charge rate until the voltage reached 4.2 V. After constant current charging, the battery was charged at a constant voltage until the current value reached 0.01 C while the voltage was maintained at 4.2 V. That is, the battery manufactured was subjected to constant current-constant voltage charging under the conditions described above. After the constant voltage charging was performed, the battery was stored under the high temperature of 50°C or more for 24 hours. After storage under the high temperature, the battery was stored under the temperature environment of 25°C for 5 hours. The battery was discharged at a constant current of a 1 C discharge rate until the voltage reached 3.0 V. The energy discharged during the constant current discharge was calculated, and the calculated energy was divided by the volume of the container member (the container and the lid member), thereby obtaining volume energy density U of the battery.

In verification, for each of Examples 1 to 10 and Comparative Examples 1 and 2, the output performance of the manufactured battery was tested. In the test on output performance, the battery was discharged from state of charge (SOC) 100% to SOC 0% under the temperature environment of 25°C. At this time, the battery was discharged at a discharge rate of 1 C. Discharge capacity Ca at the time of discharging at a discharge rate of 1 C was calculated. Thereafter, for each of Examples 1 to 10 and Comparative Examples 1 and 2, the constant current-constant voltage charging was performed under the same conditions as those described for energy density calculation. The battery subjected to constant current-constant voltage charging was discharged from SOC 100% to SOC 0%. At this time, the battery was discharged at a discharge rate of 10 C. Then, discharge capacity Cb at the time of discharging at a discharge rate of 10 C was calculated.

A value obtained by dividing the discharge capacity Cb at the discharge rate of 10 C by the discharge capacity Ca at the discharge rate of 1 C was calculated as rate capacity retention ratio η. The rate capacity retention ratio η is an index indicating output performance of the battery. A battery having a high rate capacity retention ratio η has a high output performance. A battery excellent in output performance has a low internal resistance, and therefore has a high input performance.

In verification, for each of Examples 1 to 10 and Comparative Examples 1 and 2, a test was conducted to demonstrate whether the battery could be discharged after the excessive current was cut off. In this test, a circuit including an openable/closable switch was formed. By adjusting the length, thickness, etc. of the metal forming the circuit, the internal resistance in the circuit while the switch was closed was set to 1 mQ. For a test to demonstrate whether the battery could be discharged after the excessive current was cut off, the battery was charged at a charge rate of 1 C until the SOC reached 100%. At this time, the voltage at which the SOC was 100% was the same as the voltage maintained at the constant voltage charging in calculation of the volume energy density. That is, in the battery of each of Examples 1 to 3 and 5 to 10 and Comparative Examples 1 and 2, the voltage at which the SOC was 100% was 2.7 V, while in the battery of Example 4, the voltage at which the SOC was 100% was 4.2 V. Charging until the SOC reached 100% was performed at an environmental temperature of 25±5°C.

In the test, in the battery in which the SOC was 100%, the above-described circuit in which the switch was closed was brought into contact with the pair of electrode terminals (positive electrode terminal and negative electrode terminal). This allowed the pair of electrode terminals to short-circuit via the circuit including the switch, causing an external short circuit in which the pair of electrode terminals were electrically connected without the electrode group interposed therebetween. Thus, by causing the external short circuit as described above, the battery was forcibly discharged to cause an excessive current to flow through the battery. After the flow of the excessive current, the battery was allowed to stand for 2 hours. In the battery allowed to stand, voltage V between the pair of electrode terminals was measured.

This voltage V is an indicator to determine whether the electric conduction structure between the electrode group and the electrode terminal was fused after being melted by the excessive current. That is, the voltage V is an indicator indicating whether the battery can be discharged after the excessive current is cut off. In the test described above, if the voltage V has a certain magnitude, it is considered that the portion melted by the excessive current is fused, and that the voltage is generated between the pair of electrode terminals. That is, if the voltage V has a certain magnitude, it is considered that the battery can be discharged after the excessive current is cut off.

### (Verification Results)

The above-described test results for each of Examples 1 to 10 and Comparative Examples 1 and 2 are shown in Table 2.

**Table 2**

| | Resistance value R | Volume energy density U [W•h/L] | Rate capacity retention ratio η [%] | Voltage V [V] |
|---|---|---|---|---|
| Example 1 | 10MΩ | 150 | 88.5 | 2.19 |
| Example 2 | 10MΩ | 150 | 90.2 | 2.10 |
| Example 3 | 10MΩ | 150 | 92.5 | 3.63 |
| Example 4 | 10MΩ | 190 | 84.5 | 2.22 |
| Example 5 | 10MΩ | 150 | 86.5 | I 2.35 |
| Example 6 | 10MΩ | 150 | 89.7 | 2.08 |
| Example 7 | 10MΩ | 150 | 90.1 | 2.17 |
| Example 8 | 500kQ | 150 | 85.5 | 2.26 |
| Example 9 | 10MΩ | 150 | 86.3 | 2.37 |
| Example 10 | 300kQ | 150 | 89.2 | 2.10 |
| Comparative Example 1 | 10MΩ | 150 | 79.0 | 0.05 |
| Comparative Example 2 | 10MΩ | 150 | 90.5 | 0.02 |

The verification results show that in each of Examples 1 to 10, the above-described measured resistance value R had a certain magnitude. Therefore, for the battery of each of Examples 1 to 10, it was demonstrated that an occurrence of an internal short circuit was adequately prevented. Further, in each of Examples 1 to 10, the volume energy density U of the battery had an appropriate magnitude. That is, for the battery of each of Examples 1 to 10, it was demonstrated that the volume energy density U was in the range of from 100 W•h/L to 2000 W•h/L, and that the volume energy density had an appropriate magnitude. Moreover, in each of Examples 1 to 10, the calculated rate capacity retention ratio η of the battery was somewhat high. Thus, it was demonstrated that in the battery of each of Examples 1 to 10, high output performance and input performance were secured.

Further, in each of Examples 1 to 10, the voltage V between the electrode terminals 2 hours after the excessive current was cut off had a certain magnitude. Therefore, for the battery of each of Examples 1 to 10, it was demonstrated that even when the current collector tab was melted by the excessive current, the melted portion was fused. That is, for the battery of each of Examples 1 to 10, it was demonstrated that the battery was dischargeable after the excessive current was cut off.

In Comparative Example 1, because the intermediate lead is provided, the path length of the current path is long in the electric conduction structure between the electrode group and the electrode terminal. As a result, in Comparative Example 1, the rate capacity retention ratio η was lower than that in Example 1 under the same conditions except for the intermediate lead, etc. This demonstrated that output performance and input performance in Comparative Example 1 are lower than those in Example 1, etc. Further, in Comparative Example 1, the voltage V between the electrode terminals 2 hours after the excessive current was cut off was substantially 0. Thus, it was demonstrated that in Comparative Example 1, the connected part between the lead member and the intermediate lead was melted by the excessive current, and that the melted portion was not fused even if a certain period of time elapsed since the excessive current was cut off.

In Comparative Example 2, the voltage V between the electrode terminals 2 hours after the excessive current was cut off was substantially 0. Thus, it was demonstrated that in Comparative Example 2 in which the tab bent portion was not formed, the melted portion of the current collector tab was not fused even when a certain period of time elapsed since the excessive current was cut off.

The rate capacity retention ratio η in Examples 1 and 2 in which the ratio Tl/Tt was from 1.4 to 3.0 was higher than that in Example 5 in which the ratio Tl/Tt was less than 1.4. Therefore, it was demonstrated that by setting the ratio Tl/Tt to 1.4 or more, output performance and input performance of the battery in normal use were increased.

The resistance value R between the electrode terminals before the nonaqueous electrolytic solution was poured was higher in Example 1 in which the ratio Lt/D was from 3 to 6 than that in Example 8 in which the ratio Lt/D was larger than 6. Therefore, it was demonstrated that by setting the ratio Lt/D to 6 or less, the occurrence of an internal short circuit in a battery was effectively prevented.

The rate capacity retention ratio η was higher in Example 1 in which the ratio Wt/Wc was from 0.15 to 0.30 than in Example 9 in which the ratio Wt/Wc was less than 0.15. Therefore, it was demonstrated that by setting the ratio Wt/Wc to 0.15 or more, output performance and input performance of the battery in normal use were increased.

The resistance value R between the electrode terminals before the nonaqueous electrolytic solution was poured was higher in Example 1 in which the ratio Wt/Wc was from 0.15 to 0.30 than that in Example 10 in which the ratio Wt/Wc was larger than 0.30. Therefore, it was demonstrated that by setting the ratio Wt/Wc to 0.30 or less, occurrence of an internal short circuit in the battery was effectively prevented.

In at least one of these embodiments, the current collector tab is connected to the lead member at the end on the opposite side relative to the root position of the protruding portion, and in the lead member, the bonded portion is formed at the part connected to the current collector tab. The lead member is thicker than the current collector tab, and is connected to the electrode terminal at a position different from the part connected to the current collector tab. In the current collector tab, a tab bent portion is provided between the root position of the protruding portion and the position connected to the lead member, and the current collector tab is bent at the tab bent portion. Thereby, it is possible to provide a battery that can be discharged after an excessive current is cut off by melting a part of an electric conduction structure between an electrode group and each of electrode terminals.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A battery (1), comprising:
an electrode group (2) including a positive electrode (11A) and a negative electrode (11B);
a current collector tab (12) protruding in the electrode group (2);
a lead member (16) to which the current collector tab (12) is connected at an end on a side opposite to a root position (E1) of a protruding portion, and in which a bonded portion (21;23) is formed at a part connected to the current collector tab (12), the lead member (16) being thicker than the current collector tab (12);
an electrode terminal (13) to which the lead member (16) is connected at a position different from the part connected to the current collector tab (12), and electrically connected to the current collector tab (12) with the lead member (16) interposed; and
a tab bent portion (22) provided between the root position (E1) of the protruding portion and a position (E2) connected to the lead member (16) in the current collector tab (12), and in which the current collector tab (12) is bent.

2. The battery (1) according to claim 1, wherein
a ratio (Tl/Tt) of a thickness (Tl) of the lead member (16) to a thickness (Tt) of the current collector tab (12) is 1.4 or more and 3.0 or less, and
a ratio (Lt/D) of an extending length (Lt) of the current collector tab (12), from the root position (E1) of the protruding portion to the position (E2) connected to the lead member (16), to a linear distance (D) between the root position (E1) of the protruding portion of the current collector tab (12) and the position (E2) connected to the lead member (16) of the current collector tab (12), is 3 or more and 6 or less.

3. The battery (1) according to claim 1 or 2, wherein a ratio (Wt/Wc) of a width (Wt) of the current collector tab (12) to a width (Wc) of the electrode group (2) is 0.15 or more and 0.30 or less.

4. The battery (1) according to any one of claims 1 to 3, wherein the lead member (16) is made of a same material as the current collector tab (12).

5. The battery (1) according to any one of claims 1 to 4, wherein a volume energy density is 100 W•h/L or more and 200 W•h/L or less.

6. The battery (1) according to any one of claims 1 to 5, wherein the lead member (16) is directly bonded to the current collector tab (12) at the bonded portion (23) of the part connected to the current collector tab (12).

7. The battery (1) according to any one of claims 1 to 5, further comprising:
a backup lead (17) attached to the current collector tab (12) at the end on the side opposite to the root position (E1) of the protruding portion with the current collector tab (12) sandwiched,
wherein
the lead member (16) is connected to the current collector tab (12) with a part of the backup lead (17) sandwiched between the lead member (16) and the current collector tab (12), and
the lead member (16) is bonded to the backup lead (17) at the bonded portion (21) of the part connected to the current collector tab (12).

8. The battery (1) according to any one of claims 1 to 7, wherein
the current collector tab (12) is at least one of a positive electrode current collector tab (12A) that protrudes in the electrode group (2) and a negative electrode current collector tab (12B) that protrudes in the electrode group (2) toward a side in which the positive electrode current collector tab protrudes (12A),
the lead member (16) is at least one of a positive electrode lead member (16A) connected to the positive electrode current collector tab (12A) and a negative electrode lead member (16B) connected to the negative electrode current collector tab (12B), and
the electrode terminal (13) is at least one of a positive electrode terminal (13A) electrically connected to the positive electrode current collector tab (12A) with the positive electrode lead member (16A) interposed and a negative electrode terminal (13B) electrically connected to the negative electrode current collector tab (12B) with the negative electrode lead member (16B) interposed.
